(19)

Europäisches
Patentamt
European
Patent Office
Office européen
des brevets

(11) **EP 2 562 559 A1**

(12) **EUROPEAN PATENT APPLICATION**

(43) Date of publication:
27.02.2013 Bulletin 2013/09

(51) Int Cl.:
*G01S 19/15* (2010.01)  *G01S 19/20* (2010.01)
*G01S 19/43* (2010.01)

(21) Application number: 12173254.9

(22) Date of filing: 22.06.2012

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **23.08.2011 US 201113216130**

(71) Applicant: **Raytheon Company
Waltham, MA 02451-1449 (US)**

(72) Inventors:
• **Peck, Stephen R.
West Hills, CA 91304-2253 (US)**
• **Wu, Shuwu
Yorba Linda, CA 92886-2228 (US)**
• **Fries, Robert M.
Irvine, CA 92618 (US)**

(74) Representative: **Carpmaels & Ransford
One Southampton Row
London
WC1B 5HA (GB)**

(54) **Method to handle single failure GPS fault in high integrity relative positioning systems**

(57)    A method and system to handle single failure GPS faults in high integrity relative positioning systems is provided. The system is configured to receive a number of reference measurements in carrier-phase real time kinetic positioning systems and identify if a single fault exists. The system identifies the type of fault and mitigates the effects of the single fault to provide a positioning system with a high integrity that is suitable for applications involving risk to human lives.

FIGURE 4

**Description**

BACKGROUND

High-accuracy relative positioning data used in land surveying, precision agriculture, and/or construction applications is often derived from Global Positioning System Carrier Phase Real Time Kinematic positioning techniques. Advances in these techniques, have yielded high precision positioning within a few decimeters of accuracy with minimally acceptable integrity levels.

In other applications, such as those that present a substantial risk to human life, it is desirable to provide high precision positioning with both high accuracy and high integrity. For example, applications that involve landing an aircraft, mid-air refueling, or coordinated formations flight require a real time kinetic positioning technique that is highly accurate and also provides a high integrity level.

An exemplary technique for carrier phase integer ambiguity resolution or fixing is shown and described in U.S. Pat. No. 7,768,451 to Wu et al., which is incorporated herein by reference. The technique described in U.S. Pat. No. 7,768,451 is a differential GPS technique to calculate a high integrity protection limit under the assumption that all of the GPS measurement data is without fault.

In order to further increase the integrity of any real time kinetic positioning techniques, a positioning system should monitor the received data in order to lessen the effects of faulty measurements. Monitoring, however, does not completely remove the possibility of using faulty measurements to calculate GPS positions. Therefore, it is necessary to develop a technique that mitigates the effects of a single fault within the measurements of carrier-phase real time kinetic positioning systems.

SUMMARY OF THE INVENTION

The present invention provides methods and systems for Relative Navigation Systems using Global Positioning Systems that have both high accuracy and high integrity. A relative navigation system has a reference platform (that may be moving) and remote user platforms that wish to know their relative position to the reference system with high accuracy and integrity.

Integrity is based on the (very) small probability that the relative navigation error could exceed the calculated protection level (PL). This relative navigation solution is based on at least 2 sets of synchronous GPS measurements from the reference receivers on the system and at least one remote GPS sensor on the user platform. When the reference platform and/or user platform dynamics are sufficiently high, or the measurement latency due to processing and communications is sufficiently long, an Inertial Navigation System (INS) based on measurements from Inertial Measurement Units (IMU) that consist of gyrometers and accelerometers may optionally be used to propagate the relative navigation solution between GPS measurements and/or to extrapolate the solution to current time to account for system latency.

In one embodiment a method, executed on a processor, for processing single failure GPS faults is provided. The method includes receiving at least two sets of GPS reference measurements and at least one set of remote user GPS measurements; determining, at the processor, a GPS relative positioning solution (H0 solution) based on the at least two sets of GPS reference measurements and the at least one set of remote user GPS measurements. The method also includes excluding a particular set of the at least two sets of GPS reference measurements from the GPS relative positioning solution (H0 solution) to obtain an excluded GPS measurement data set. The method includes excluding a different set of the at least two sets of GPS reference measurements from the GPS relative positioning solution (H0 solution) to obtain at least one other excluded GPS reference measurement data set. The method further includes calculating a H1 protection level based on a priori probability of a single failure GPS receiver fault. The method includes calculating at least one other H1 protection level based on a priori probability of a single failure GPS receiver fault. The method includes identifying a maximum of the H1 protection level and the at least one other H1 protection level to determine a final H1 protection level, at the processor. An H1 protection level is calculated based on the unbiased protection level of a single receiver fault and the bias created by not using the faulted receiver in the solution, thus determining the overall H1 protection level.

The method also includes determining one or more overall protection levels based on the final H1 protection level. The method includes verifying an integrity requirement based on the overall protection levels.

The method also includes determining at the processor when a receiver fault exists and determining an H1 unbiased protection level based on an H1 integrity risk allocation derived from the overall integrity requirement. The absolute value of the difference between the determined H0 (unfaulted) solution and the H1 solution is added to the second protection level to determine a H1 receiver error protection level.

In another embodiment, a method executed on a processor is provided for processing single failure GPS (ephemeris) faults that are smaller than the minimum detectable error (MDE). The method includes receiving at least two sets of GPS reference measurements at the processor. The at least two sets of GPS reference measurements include unfaulted measurements. The method includes determining at the processor if an ephemeris error exists less than or equal to the MDE, calculating at the processor an unbiased protection level based on the H1 integrity risk allocation of the overall integrity requirement. The method includes determining at the processor a maximum ephemeris error impact on relative position and adding the maximum position error to the unbiased protection level to determine an H1 ephemeris error protection level.

In yet another embodiment, a method executed on a processor is provided for processing single failure IMU fault that has not yet been detected. The method includes receiving at least two sets of GPS reference measurements at the processor. The at least two sets of GPS reference measurements include unfaulted measurements. The method includes determining at the processor the position error if an IMU error exists and calculating at the processor an unbiased protection level based on the H1 integrity risk allocation of the overall integrity requirement. The method includes adding the bias position error to the unbiased protection level to determine an H1 IMU error protection level.

In yet another aspect a system for processing single failure GPS faults is provided. The system includes at least one processor and module executing on the at least one processor to receive at least two sets of GPS reference measurements. The at least two sets of GPS reference measurements include one or more unfaulted measurements. The module determines the total protection level assuming a single fault exists (either ephemeris fault of GPS reference receiver fault). The module then calculates an overall protection level based on the maximum of the three types of H1 protection levels and the H0 protection level.

BRIEF DESCRIPTION OF THE DRAWINGS

Fig. 1 is a diagram of a relative positioning system.
Fig. 2 is a block diagram of a relative positioning system.
Fig. 3 is a block diagram a database within a relative positioning system.
Fig. 4 is a functional flowchart depicting an embodiment of a method of handling single failure GPS faults.
Fig. 5 is a logical flowchart depicting an embodiment of a method of handling single failure GPS faults.

DETAILED DESCRIPTION OF THE PREFERRED EMBODIMENTS

Modem global positioning systems (GPS) aim to provide both high integrity and high accuracy GPS data. High integrity is a quantification of the confidence in the accuracy of the GPS measurements or positioning data determined by a GPS system. The high integrity quantification is referred to as a protection level. Thus, users of the system can ensure based on the confidence level that the probability of the relative position error is greater than the protection level (referred to as the integrity risk).

In order to provide a high accuracy and high-integrity relative positioning system, the present invention relies upon the availability of a number of reference GPS measurements sets, at least one remote (user) measurement set and optional Inertial Measurement Units (IMU) measurement sets. Preferably, two or more reference GPS measurements are used in order to directly calculate a bias term in the position domain using the multiple reference GPS measurement sets, instead of relying on an indirect position-domain bias computation based upon range domain bias values. In one aspect, the single fault (H1) protection level is computed in Real Time Kinetic (RTK) based differential GPS solutions. A position-domain bias is calculated and the H1 protection level is calculated directly in the position domain, thereby eliminating the need to send range-domain bias values to the remote user.

In another aspect, the present invention is used within a GERAFS processing framework, as shown and described in U.S. Patent No. 7,768,451. In other aspects, a high integrity system may be used in conjunction with other differential GPS solution processing technique, as long as there are at least two reference GPS measurements. As will be explained in more detail below, such methods and techniques may be used as part of the high integrity system described herein.

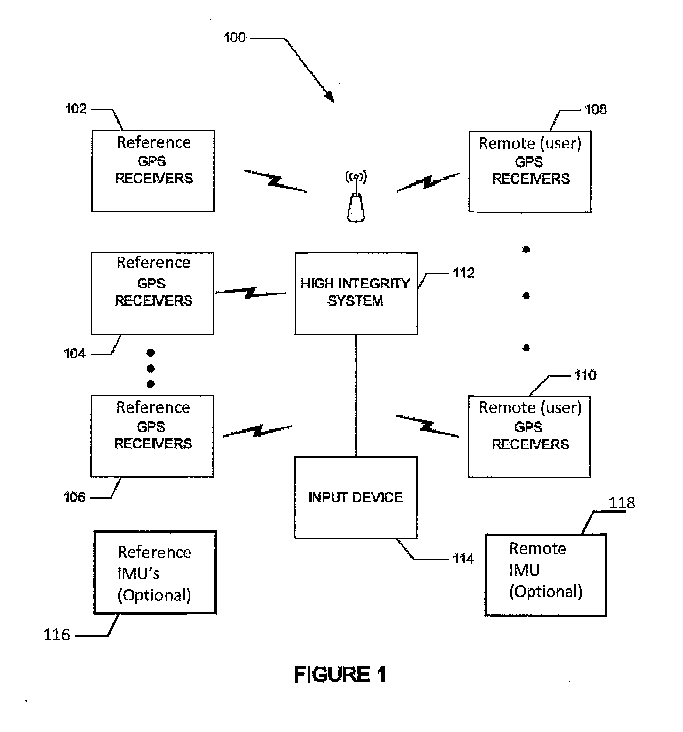

Referring to Fig. 1, a system for handling single failure GPS faults in high integrity relative positioning systems is illustrated in accordance with a first embodiment of the present invention, and is indicated as 100. The system 100 includes a plurality of GPS reference receivers 102, 104, 106, at least one remote user GPS receiver 108, (and 110), optional reference IMUs 116 and 118 (to maintain high accuracy and integrity in high dynamics and / or significant system latencies), a high integrity system 112, and an input device 114 to link measurements between the reference and a user. Each receiver 102, 104, 106, 108, and 110 may receive GPS measurements (i.e. location and time information) from a GPS satellite. In one aspect, the GPS receivers 102, 104, and 106 and the Remote (user) GPS receivers 108- 110 are in communication with the high integrity system 112. In another aspect, the GPS receivers 102, 104, and 106 and the Remote (user) GPS receivers 108- 110 may send GPS measurements to the high integrity system 112. Optionally, the Reference IMUs 116 and remote IMU(s) 118 may also be in communication with the high integrity system and send measurements to the high integrity system 112. Once GPS measurements are received by the high integrity system 112, the high integrity system 112 executes a GPS high integrity application 206 to provide a high integrity solution that militates against any single faults that may be present in the received GPS or IMU measurements or large GPS ephemeris errors.

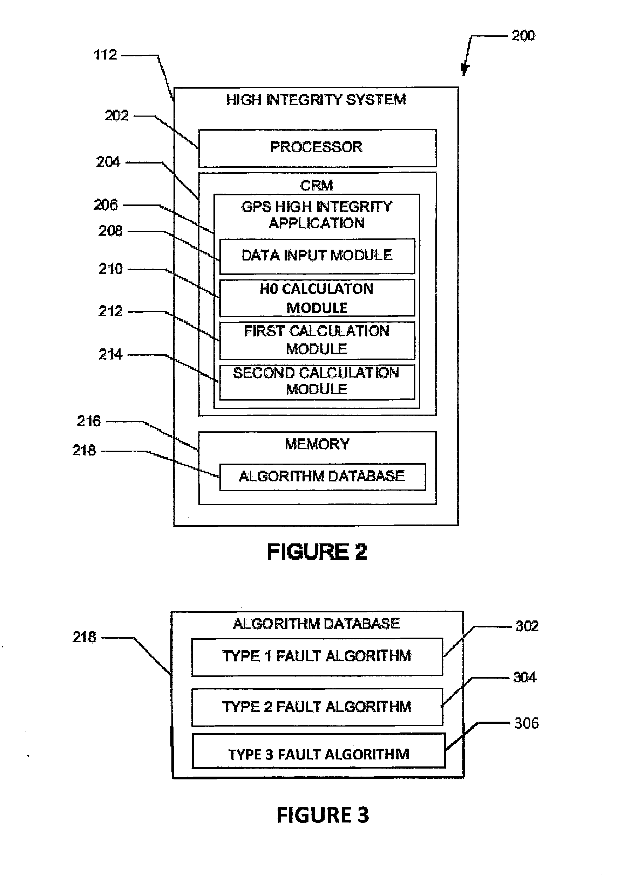

Referring to Fig. 2, the high integrity system 112 includes a processor 202 that executes the high integrity application 206. The high integrity system 112 may reside on a computing device or other computing system. In another aspect, the high integrity system 112 resides on a distributed computing system or processing system.

The high integrity application 206 includes instructions or modules that are executable by the processor 202 to compute a high integrity solution. The high integrity system 112 includes a computer readable media 204 configured with the high integrity application 206.

The computer readable media (CRM) 204 may include volatile media, nonvolatile media, removable media, non-removable media and/or another available medium that can be accessed by the high integrity system 112. By way of example and not limitation, computer readable media 204 comprises computer storage media. Computer storage media includes memory, volatile media, nonvolatile media, removable media, and/or non-removable media implemented in a method or technology for storage of information, such as computer readable instructions, data structures, program modules, or other data.

The high integrity application 206 includes a data link input module 208 for receiving GPS data. In one aspect, the data link input module 208 may receive reference receiver data and remote (user) receiver data. In another aspect, the data input module may receive optional IMU data. For example and according to one embodiment, the input data module 208 receives at least two sets of GPS measurements from GPS receivers, such as reference receivers and remote (user) GPS receivers 102-110, and/or optional IMU data from optional reference IMU's 116 and 118. In yet another aspect, the input data module 208 may be linked to a database to retrieve previously stored GPS and IMU data.

Whereas the H0 protection level provides full integrity with nominal measurement errors (fault free), the GPS High Integrity Application 206 provides integrity in the rare event of an undetected fault. In one embodiment, the faults can be one of three types of faults: (unobservable) ephemeris faults, (unobservable) receiver faults, or IMU faults. Ephemeris faults are information based faults, e.g., faults in ephemeris data and/or clock messages. For example, in one aspect, ephemeris data that provides the satellite position may experience unusually large errors. Typically, ephemeris faults are monitored by high integrity systems, but only at an observable threshold, which is considerably larger than normal ephemeris errors. Thus, ephemeris faults are larger than normal ephemeris errors that do not meet the observable threshold. These unobservable faults may compromise integrity. Receiver faults are receiver measurement errors, both pseudorange and carrier-phase. Typically, receiver measurement errors are normal and accounted for in calculations (typically the size of the errors is assumed to be Gaussian overbounded by a measurement model used in determining H0 protection levels). However, due to hardware degradation or environmental changes the actual GPS measurements may have receiver faults that are higher than expected. Similarly, IMU may have faulted hardware that provides degraded measurements with attitude errors that are larger than expected. Further, while receiver or IMU faults can be monitored over time, receiver or IMU faults cannot instantly be detected during exposure time (the time between receiver fault inception and detection), resulting in H0 protection levels that do not meet the desired integrity requirements for certain applications.

When measurements are received by the high integrity system 112, an H0 calculation module 210 retrieves processing data from an algorithm database 218 and calculates the relative position solution and the H0 protection levels as part of the high integrity system 112 that assumes nominal errors. The algorithm database 218 is a computer system, a database, or another data system that processes data. In one aspect, the algorithm data database stores and accesses algorithms for processing GPS data.

The first calculation module 212 selects an H1 fault algorithm from an algorithm database 218 located in a memory 216, to calculate a protection level based on each type of fault against which the system protects.

Referring briefly to Fig. 3, in one aspect, if the identified fault is an ephemeris error, the first calculation module 212 selects a type 1 fault algorithm 302 to calculate an H1 ephemeris protection level. In one aspect, the type 1 fault algorithm is given as:

$$PL_{HI}{}^{eph} = PL^{eph}{}_{unbiased} + Max(Eph_{MDE}), \qquad (1)$$

where $PL^{eph}{}_{unbiased}$ is an unbiased protection level calculated using the H1 integrity protection level risk allocation determined by the ephemeris fault a-priori and $Max(Eph_{MDE})$ is the maximum value for the undetectable ephemeris error. For example, $Max(Eph_{MDE})$ may be determined based upon the impact of a worst-case scenario ephemeris error for a GPS satellite that passed the ephemeris monitor undetected.

In another aspect, the fault type 1 algorithm may be used in conjunction with an underlying differential GPS processing technique. The differential technique may be Geometry Extra-Redundant Almost Fixed Solutions (GERAFS) processing, carrier-smoothed-code solution processing or any other DGPS approaches. By way of example and not limitation, the fault type 1 algorithm may be given as:

$$PL_{HI}{}^{eph} = GERAFS\_PL(all\_measurements,\ H1\_integrity\ PL\ risk)+$$

$$Max_{SV}\{RelPos\_error(Eph_{MDE})\},\ (2)$$

where GERAFS_PL(all_measurements, H1_integrity PL risk) is an unbiased protection level determined using GERAFS processing using all measurements and the H1_integrity PL risk. In this example, the H1 integrity PL risk is calculated by dividing the total H1 ephemeris integrity risk by the probability of undetectable ephemeris errors existing. The total H1 ephemeris integrity risk is a product of the ephemeris fault onset risk, the ephemeris fault exposure time, and the H1 integrity protection level risk, which is the risk that the H1 protection level fails to bound the real error given that the ephemeris fault of minimum detectable ephemeris error ($Eph_{MDE}$) magnitude exists.

In one aspect, when choosing conservative values for the first onset risk and the exposure time the resulting allocation for the H1 protection level risk is several orders of magnitude less stringent than an H0 protection level. For example, selecting a $1 \times 10^{-4}$ per hour first onset risk (the GPS specification for all types of faults) and 2 hour exposure time (the time of applicability for usual operations). Even for a total H1 integrity risk that is an order of magnitude more stringent than the H0 integrity risk, the H1 integrity PL risk is several orders of magnitude less stringent because of the low probability of the ephemeris fault existing. The H1 protection level has two terms in the computation. The first term is an unbiased protection level based on all measurements and the H1 integrity PL risk. In one aspect, the unbiased protection level is the GERAFS unbiased protection level. The second term is a deterministic term that is computed to account for the impact of the worst-case satellite ephemeris error equaling the $Eph_{MDE}$. This term is linearly added to the unbiased protection level.

If the protection level is computed for a receiver fault, the first calculation module 212 selects a fault type 2 algorithm 304 to calculate an H1 receiver fault protection level. In one aspect, the fault type 2 algorithm is given as:

$$PL_{HI}{}^{RRi} = PL_{HI}(unfaulted\ measurements) + |H0\text{-}H1\ (unfaulted\ measurements)|$$

$$(3)$$

where $PL_{H1}$(unfaulted measurements) is an unbiased protection level calculated using the unfaulted reference GPS measurements and the H1 integrity PL risk, H0 is a fixed solution assuming there are no faults, and H1(unfaulted measurements) is an H1 solution calculated from the unfaulted reference GPS measurements.

In another aspect, the fault type 2 algorithm may be used in conjunction with an underlying differential GPS processing technique. For example and without limitation, the fault type 2 algorithm is given as:

$$PL_{HI}{}^{RRi} = PL\_G(E)RAFS(All\_but\_RRi\_meas,\ H1\_intgrity\_PL\_risk)+$$

$$|\ GERAFS_{H0}\text{-}G(E)RAFS_{HI}(All\_but\_RRi\text{-}meas)\ |$$

where GERAFS_PL(unfaulted_measurements, H1_integrity PL risk) is an unbiased protection level determined using G(E)RAFS processing and the H1_integrity PL risk. In this example, the unbiased H1 integrity PL risk is calculated by dividing the total H1 receiver integrity risk by the probability of an undetected reference receiver fault existing. The H1 integrity risk is a product of the reference receiver fault onset risk, the receiver fault exposure time, and the H1 integrity protection level risk, which is the risk that the unbiased H 1 protection level fails to bound the real H1 relative position error given that the unfaulted reference receiver measurements were used to calculate the H1 relative position solution. The bias term is calculated in the position domain using the multiple reference data sets, instead of indirect position domain bias computation using the range-domain B-values. If the protection level is computed for an IMU fault, the first calculation module 212 selects a fault type 3 algorithm 306 to calculate an H1 IMU fault protection level. In one aspect, the fault type 3 algorithm is given as:

$$PL_{HI}{}^{IMUi} = PL_{HI}(receiver\ measurements) + |position\ domain\ B\text{-}value\ for\ IMU_i|$$

$$(4)$$

where $PL_{H1}$(receiver measurements) is an unbiased protection level calculated using the all the reference GPS measurements and the H1 integrity PL risk, position domain B-value for $IMU_i$ is the difference in relative position using measurements from all IMU and the relative position using all measurements except from $IMU_i$ (presumed faulted IMU). The IMU attitude information is needed when the relative position solution is to a point (referred to as reference point) on a dynamic platform that is not at the reference receiver location. In this event, the IMU attitude solutions are used to compute the lever arm form the reference receivers to the reference point in inertial coordinates.

In another aspect, the fault type 3 algorithm may be used in conjunction with an underlying differential GPS processing technique. For example and without limitation, the fault type 3 algorithm is given as:

$$PL_{HI}{}^{IMUi} = PL\_GERAFS(All\_RR\_meas,\ H1\_intgrity\_PL\_risk) + |position\ domain$$

$$B\text{-}value\ for\ IMU_i|$$

where GERAFS_PL(all RR_measurements, H1_integrity PL risk) is an unbiased protection level determined using GERAFS processing and the H1_integrity_PL_risk. In this example, the unbiased H1 integrity PL risk is calculated by dividing the total H1 receiver integrity risk by the probability of an undetected IMU fault existing. The H1 integrity risk is a product of the IMU fault onset risk, the IMU fault exposure time, and the H1 integrity protection level risk, which is the risk that the unbiased H1 protection level fails to bound the real H1 relative position error. The bias B-value term is calculated in the position domain using the multiple IMU data sets, instead of indirect position domain bias computation using the range-domain B-values.

A second calculation module 214 calculates an overall protection level. The overall protection level is calculated based on an H0 protection level and a H1 protection level. In one aspect, the overall protection level is calculated using the following equation:

$$PL_{Overall} = Max\ \{H0\ protection\ level,\ H1\ protection\ level\}$$

Thus, the $PL_{Overall}$ protection level is the maximum of the H0 protection level and the H1 protection level.

In another aspect, the overall protection level may be calculated in conjunction with an underlying differential GPS processing technique. The differential technique may be GERAFS processing, carrier-smoothed-code solution processing or any other differential GPS

approaches. By way of example and not limitation, the overall protection level may be calculated using the following equation:

$$PL\_GERAFS = Max\left\{PL_{H0}, PL_{H1}^{eph}, PL_{H1}^{RR}, PL_{H1}^{IMU}\right\}$$

where the *PL_GERAFS* protection level is the overall protection level based on the maximum of the H0 protection level, the ephemeris fault protection level, the receiver fault protection level and/or the IMU fault protection level.

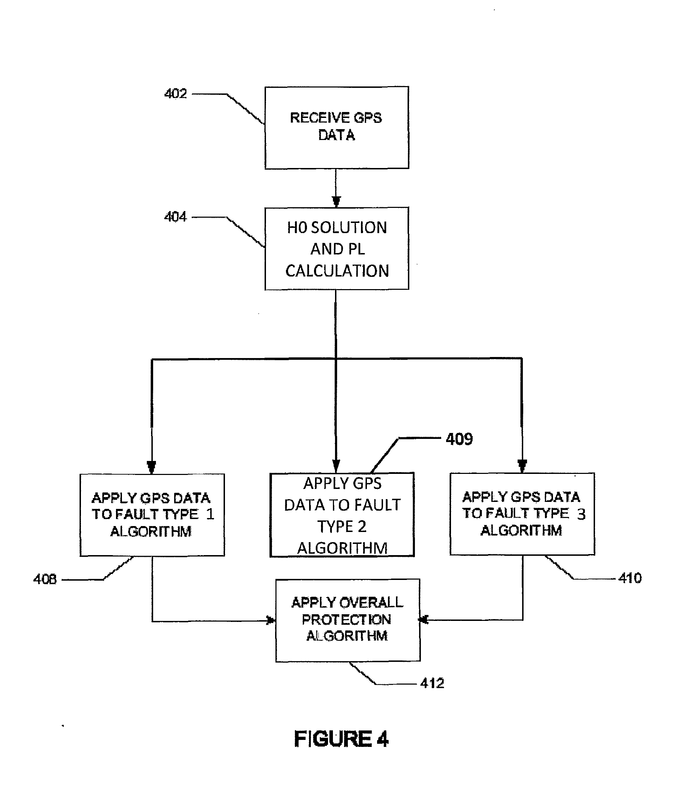

Fig. 4 is a functional flow chart illustrating another embodiment of the high integrity system 112. At 402, at least two sets of GPS reference measurements, at least 1 remote (user) GPS set of measurements and optional IMU measurement data sets are received. The unfaulted H0 relative position solution and protection levels are computed in the H0 algorithm at 404. For each potential undetected fault type an H1 an protection level is computed. For a type 1 fault, the GPS reference measurements are applied to a type 1 fault algorithm to calculate a type 1 H1 protection level at 408. For a type 2 fault, the GPS reference measurements are applied to a fault type 2 algorithm to calculate a type 2 H1 protection level at 409. For a type 3 fault, the GPS reference measurements are applied to a fault type 3 algorithm to calculate a type 3 H1 protection level at 410. At 412, an H0 protection level, the type 1 H1 protection level, the type 2 H1, and the type 3 H1 protection level are applied to an overall protection algorithm to calculate an overall protection level.

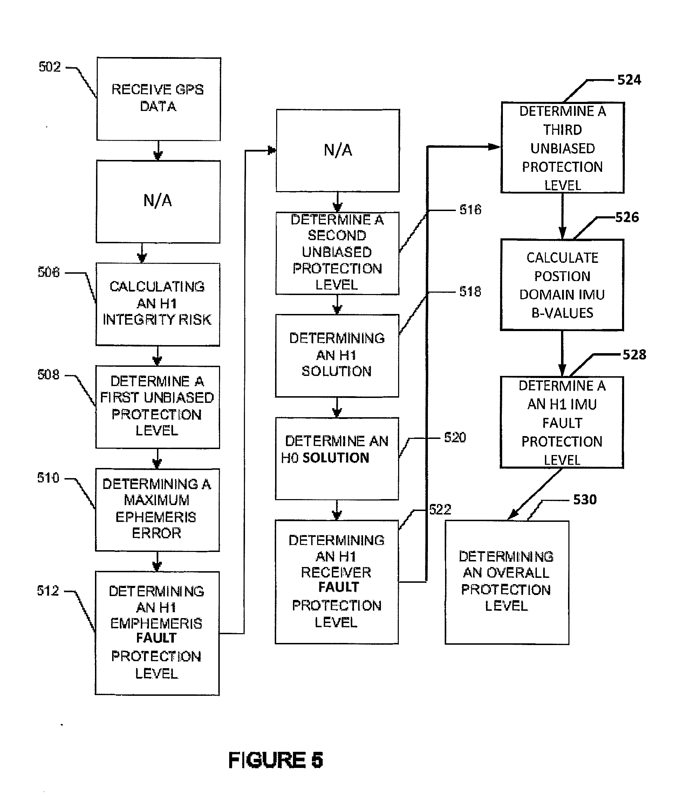

Fig. 5 is a logical flowchart depicting an embodiment of a method 500 for handling single failure GPS faults. In one aspect, the method is performed on a processing system, such as the high integrity system 112. In another aspect, the method is performed on a distributed processing system.

At 502, at least two sets of GPS reference measurements, at least 1 remote (user) GPS set of measurements, and optional IMU measurement data sets are received at the processor 202 of the high integrity system 112. In one aspect, the GPS reference measurement sets include one or more unfaulted measurements. At 506, the high integrity system 112 calculates an H1 integrity risk assuming an undetected ephemeris fault. A first unbiased protection level is determined at 508. In one aspect, the first unbiased protection level is based on a first overall integrity requirement. The first overall integrity requirement is further based on the at least two sets of GPS reference measurements and the calculated H1 integrity risk. The high integrity system 112 determines maximum ephemeris error at 510. At 512, an H1 ephemeris error protection level is determined by adding the maximum ephemeris error to the first unbiased protection level.

In one aspect, the high integrity system 112 also calculates a reference receiver H1 protection level. At 516, the high integrity system 112 determines a second unbiased protection level based on a second overall integrity requirement assuming an undetected reference receiver fault. The second overall integrity requirement is based on the measurements from one or more unfaulted reference receivers and the H1 integrity PL risk. The high integrity system 112 determines an H1 solution at 518. At 520 an H0 protection level is determined. At 522, the high integrity system 112 determines an H1 receiver fault protection level by adding the absolute value of the difference between the determined H0 position solution and the H1 position solution to the second unbiased protection level.

In one aspect, the high integrity system 112 also calculates an IMU H1 protection level. At 524, the system determines a third unbiased protection level based on a second overall integrity requirement assuming an undetected IMU fault. The third overall integrity requirement is based on the measurements from one or more unfaulted reference receivers and the H1 integrity PL risk. At 526, high integrity system 112 determines the IMU B-value in the position domain. At 528, high integrity system 112 determines an H 1 IMU fault protection level by adding the absolute value of the IMU B-value to the third unbiased protection level. The high integrity system 112 determines an overall protection level based on the H1 ephemeris fault protection level, the H0 protection level, the H1 receiver fault protection level, and the H1 IMU fault protection level further increasing the integrity level of the system at 530.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

The description above includes example systems, methods, techniques, instruction sequences, and/or computer program products that embody techniques of the present disclosure. However, it is understood that the described disclosure may be practiced without these specific details.

In the present disclosure, the methods disclosed may be implemented as sets of instructions or software readable by a device. Further, it is understood that the specific order or hierarchy of steps in the methods disclosed are instances of example approaches. Based upon design preferences, it is understood that the specific order or hierarchy of steps in the method can be rearranged while remaining within the disclosed subject matter. The accompanying method claims present elements of the various steps in a sample order, and are not necessarily meant to be limited to the specific order or hierarchy presented.

The described disclosure may be provided as a computer program product, or software, that may include a machine-readable medium having stored thereon instructions, which may be used to program a computer system (or other electronic devices) to perform a process according to the present disclosure. A machine-readable medium includes any mechanism for storing information in a form (e.g., software, processing application) readable by a machine (e.g., a computer). The machine-readable medium may include, but is not limited to, magnetic storage medium (e.g., floppy diskette), optical storage medium (e.g., CD-ROM); magneto-optical storage medium, read only memory (ROM); random access memory (RAM); erasable programmable memory (e.g., EPROM and EEPROM); flash memory; or other types of medium suitable for storing electronic instructions.

It is believed that the present disclosure and many of its attendant advantages will be understood by the foregoing description, and it will be apparent that various changes may be made in the form, construction and arrangement of the components without departing from the disclosed subject matter or without sacrificing all of its material advantages. The form described is merely explanatory, and it is the intention of the following claims to encompass and include such changes.

While the present disclosure has been described with reference to various embodiments, it will be understood that these embodiments are illustrative and that the scope of the disclosure is not limited to them. Many variations, modifications, additions, and improvements are possible. More generally, embodiments in accordance with the present disclosure have been described in the context of particular implementations. Functionality may be separated or combined in blocks differently in various embodiments of the disclosure or described with different terminology. These and other variations, modifications, additions, and improvements may fall within the scope of the disclosure as defined in the claims that follow.

Those skilled in the art will appreciate that variations from the specific embodiments disclosed above are contemplated by the invention. The following invention should not be restricted to the above embodiments, but should be measured by the following claims.

**Claims**

1. A method for processing single failure GPS receiver faults, the method comprising:

receiving, at a processor, at least two sets of GPS reference measurements and at least one set of remote user GPS measurements;

determining, at the processor, a GPS relative positioning solution (H0 solution) based on the at least two sets of GPS reference measurements and the at least one set of remote user GPS measurements;

excluding a particular set of the at least two sets of GPS reference measurements from the GPS relative positioning solution (H0 solution) to obtain an excluded GPS measurement data set, at the processor;

excluding a different set of the at least two sets of GPS reference measurements from the GPS relative positioning solution (H0 solution) to obtain at least one other excluded GPS reference measurement data set, at the processor;

calculating, at the processor, a H1 protection level based on a priori probability of a single failure GPS receiver fault;

calculating, at the processor, at least one other H1 protection level based on a priori probability of a single failure GPS receiver fault and the bias between the excluded solution and the H0 solution;

identifying a maximum of the H1 protection level and the at least one other H1 protection level to determine a final H1 protection level, at the processor and the bias between the excluded solution and the H0 solution;

determining one or more overall protection levels based on the final H1 protection level, at the processor; and

verifying an integrity requirement based on the overall protection levels, at the processor.

2. The method of claim 1, wherein determining the H1 protection level and the at least one other H1 protection level based on a priori probability further comprises:

determining a GPS positioning solution (H1 solution);

determining one or more position-domain absolute differences (H1 bias) between the GPS positioning solution (H1 solution)and the GPS relative positioning solution (H0 solution);and

adding the H1 bias to the H1 protection level and the at least one other H1 protection level to determine the final H1 protection level for the excluded set of GPS reference measurements and the at least one other excluded set of GPS reference measurements.

3. The method of claim 1, wherein determining the one or more overall protection levels includes calculating an H0 protection level.

4. The method of claim 1, wherein the protection levels are determined in the position domain.

5. The method of claim 3, wherein the one or more overall protection levels are the maximum H0 protection level and the maximum H1 protection level.

6. The method of claim 1, wherein determining when a single GPS receiver fault exists is based on the at least two sets of GPS references.

7. The method of claim 1, wherein the GPS relative positioning solution (H0 solution) and the GPS positioning solution (H1 solution) and their associated protection levels are determined by GERAFS processing.

8. The method of claim 1, wherein the GPS relative positioning solution (H0 solution) and the GPS positioning solution (H1 solution) and their associated protection levels are determined using a carrier-smoothed-code solution.

9. The method of claim 1, wherein the GPS relative positioning solution (H0 solution) and the GPS positioning solution (H1 solution) and their associated protection levels are determined using a combination of GERAFS and carrier-smoothed-code solutions.

**10.** A method for processing single failure GPS faults, the method comprising:

determining an H1 integrity risk at a processor;
determining an overall integrity allocation at the processor;
calculating an unbiased relative positioning solution (H0 solution) at the processor;
calculating a biased relative positioning solution (H1) under a single failure GPS fault at the processor;
determining position-domain absolute differences (H1 bias) between the H1 solution and the H0 solution, at the processor;
calculating a H1 protection level based on a priori probability for a single failure GPS faults, at the processor;
calculating a final H1 protection level by adding the H1 bias to the H1 protection level, at the processor;
calculating, at the processor, an overall protection levels based on the final H1 protection level; and
verifying, at the processor, an integrity requirement based on the one or more overall protection levels.

**11.** The method of claim 10, wherein the type of the single fault is an ephemeris error, the method further comprising:

determining a maximum ephemeris error;
determining relative positioning solution under the maximum ephemeris error; and
determining relative positioning solution under biased GPS measurements.

**12.** The method of claim 10, wherein the H1 integrity risk is a product of an ephemeris fault onset risk, an ephemeris fault exposure time, and an H1 protection level risk.

**13.** The method of claim 10, wherein the H 1 integrity risk is a product of an inertial measurement unit (IMU) fault onset risk, an IMU fault exposure time, and an H1 protection level risk.

**14.** The method of claim 10, wherein calculating the one or more overall protection levels comprises calculating an H0 protection level.

**15.** The method of claim 10, wherein the each protection level is calculated in the position domain.

FIGURE 1

200

112

HIGH INTEGRITY SYSTEM

202

PROCESSOR

204

CRM

206

GPS HIGH INTEGRITY
APPLICATION

208

DATA INPUT MODULE

210

H0 CALCULATON
MODULE

212

FIRST CALCULATION
MODULE

214

SECOND CALCULATION
MODULE

216

MEMORY

218

ALGORITHM DATABASE

**FIGURE 2**

ALGORITHM DATABASE

218

TYPE 1 FAULT ALGORITHM — 302

TYPE 2 FAULT ALGORITHM — 304

TYPE 3 FAULT ALGORITHM — 306

**FIGURE 3**

402 —— RECEIVE GPS
DATA

404 —— H0 SOLUTION
AND PL
CALCULATION

APPLY GPS DATA
TO FAULT TYPE 1
ALGORITHM

409

APPLY GPS
DATA TO FAULT
TYPE 2
ALGORITHM

APPLY GPS DATA
TO FAULT TYPE 3
ALGORITHM

408 ——

—— 410

APPLY OVERALL
PROTECTION
ALGORITHM

—— 412

**FIGURE 4**

EP 2 562 559 A1

RECEIVE GPS DATA — 502

N/A

CALCULATING AN H1 INTEGRITY RISK — 506

DETERMINE A FIRST UNBIASED PROTECTION LEVEL — 508

DETERMINING A MAXIMUM EPHEMERIS ERROR — 510

DETERMINING AN H1 EMPHEMERIS FAULT PROTECTION LEVEL — 512

N/A

DETERMINE A SECOND UNBIASED PROTECTION LEVEL — 516

DETERMINING AN H1 SOLUTION — 518

DETERMINE AN H0 SOLUTION — 520

DETERMINING AN H1 RECEIVER FAULT PROTECTION LEVEL — 522

DETERMINE A THIRD UNBIASED PROTECTION LEVEL — 524

CALCULATE POSTION DOMAIN IMU B-VALUES — 526

DETERMINE A AN H1 IMU FAULT PROTECTION LEVEL — 528

DETERMINING AN OVERALL PROTECTION LEVEL — 530

FIGURE 5

13

**Europäisches Patentamt**
**European Patent Office**
**Office européen des brevets**

## PARTIAL EUROPEAN SEARCH REPORT

Application Number

under Rule 62a and/or 63 of the European Patent Convention.
This report shall be considered, for the purposes of
subsequent proceedings, as the European search report

EP 12 17 3254

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 7 711 482 B2 (COATANTIEC JACQUES [FR] ET AL) 4 May 2010 (2010-05-04) * column 7, line 4 - column 9, line 20; figures 2,3 * | 10-15 | INV. G01S19/15 G01S19/20 G01S19/43 |
| A,D | US 7 768 451 B2 (WU SHUWU [US] ET AL) 3 August 2010 (2010-08-03) * the whole document * | 10-15 | |
| A | SAYIM I ET AL: "Overbounding non-zero mean gaussian ranging error for navigation integrity of LAAS", RECENT ADVANCES IN SPACE TECHNOLOGIES, 2005. RAST 2005. PROCEEDINGS OF 2ND INTERNATIONAL CONFERENCE ON ISTANBUL, TURKEY JUNE 9-11, 2005, PISCATAWAY, NJ, USA,IEEE, 9 June 2005 (2005-06-09), pages 404-410, XP010838606, ISBN: 978-0-7803-8977-9 * the whole document * | 10-15 | |

TECHNICAL FIELDS
SEARCHED       (IPC)

G01S

### INCOMPLETE SEARCH

The Search Division considers that the present application, or one or more of its claims, does/do
not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| Munich | 23 January 2013 | Fanjul Caudevilla, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04E07)

Europäisches
Patentamt

European
Patent Office

Office européen
des brevets

**INCOMPLETE SEARCH
SHEET C**

Application Number

EP 12 17 3254

Claim(s) completely searchable:
        10-15

Claim(s) not searched:
        1-9

Reason for the limitation of the search:

Claim 1 and their dependent claims relate to a method for processing single failure GPS receiver faults.
No support or embodiment could be found in the description for the steps of:
a) excluding a particular set of the at least two sets of GPS reference measurements from the GPS relative positioning solution (H0 solution) to obtain an excluded GPS measurement data set, at the processor;
b) excluding a different set of the at least two sets of GPS reference measurements from the GPS relative positioning solution (H0 solution) to obtain at least one other excluded GPS reference measurement data set, at the processor;
In particular, no indication is provided about the method used for choosing and excluding the "particular" set and the "different" set of the GPS reference measurements
c) calculating, at the processor, at least one other H1 protection level based on a priori probability of a single failure GPS receiver fault and the bias between the excluded solution and the H0 solution;
d) identifying a maximum of the H1 protection level and the at least one other H1 protection level to determine a final H1 protection level, at the processor and the bias between the excluded solution and the H0 solution;
The wording of the steps (a) - (d) appears only on page 2 (summary of the invention), which includes a literal repetition of the claim.

**ANNEX TO THE EUROPEAN SEARCH REPORT
ON EUROPEAN PATENT APPLICATION NO.**

EP 12 17 3254

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2013

| Patent document cited in search report | | Publication date | Patent family member(s) | | Publication date |
|---|---|---|---|---|---|
| US 7711482 | B2 | 04-05-2010 | AT | 451626 T | 15-12-2009 |
| | | | CA | 2664994 A1 | 10-04-2008 |
| | | | EP | 2069818 A1 | 17-06-2009 |
| | | | FR | 2906893 A1 | 11-04-2008 |
| | | | JP | 2010506156 A | 25-02-2010 |
| | | | US | 2010026567 A1 | 04-02-2010 |
| | | | WO | 2008040658 A1 | 10-04-2008 |
| US 7768451 | B2 | 03-08-2010 | US | 2009027262 A1 | 29-01-2009 |
| | | | WO | 2009014823 A2 | 29-01-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7768451 B, Wu